# EUROPÄISCHE PATENTSCHRIFT

(11) **EP 2 580 575 B1**
(45) Veröffentlichungstag und Bekanntmachung des Hinweises auf die Patenterteilung: **11.11.2020**
(21) Anmeldenummer: 11735779.8
(22) Anmeldetag: 09.06.2011
(51) Int. Cl.: G01N 21/35, G01N 21/3504, G01N 21/3518

(54) **REDUZIERUNG DER SCHWINGUNGSEMPFINDLICHKEIT BEI NDIR-ZWEISTRAHLFOTOMETERN**
REDUCING THE SENSITIVITY TO VIBRATION IN NDIR DOUBLE BEAM PHOTOMETERS
RÉDUCTION DE LA SENSIBILITÉ À L'OSCILLATION DE PHOTOMÈTRES NDIR À DOUBLE FAISCEAU

(30) Priorität: 11.06.2010 DE 102010023454
(43) Veröffentlichungstag der Anmeldung: 17.04.2013
(73) Patentinhaber: ABB AG, 68309 Mannheim (DE)
(72) Erfinder: RATHKE, Carsten, 61137 Schöneck (DE); RÜDIGER, Werner, 64367 Mühltal (DE)
(74) Vertreter: Maiwald Patent- und Rechtsanwaltsgesellschaft mbH
(86) Internationale Anmeldenummer: PCT/EP2011/002829
(87) Internationale Veröffentlichungsnummer: WO 2011/154138

(56) Entgegenhaltungen:
- EP-A1- 1 621 868
- DE-A1- 2 614 181
- DE-A1-102005 059 986
- US-A- 3 162 761

## Beschreibung

### Gebiet der Erfindung

Die Erfindung betrifft die Infrarot-Zweistrahlfotometrie. Insbesondere betrifft die Erfindung eine Chopperscheibe für ein nicht-dispersives Infrarot-Zweistrahlfotometer zur Gasanalyse, ein nicht-dispersives Infrarot-Zweistrahlfotometer mit einer solcher Chopperscheibe, ein Verfahren zur Signalauswertung eines Signals, das mit einem nicht-dispersiven Infrarot-Zweistrahlfotometer erfasst wird sowie die Verwendung eines nicht-dispersives Infrarot-Zweistrahlfotometer zur Gasanalyse.

### Technologischer Hintergrund

Nicht-dispersive Infrarot-Fotometer (NDIR-Fotometer) mit opto-pneumatischen Empfängern verfügen gegenüber anderen optischen Messverfahren der Gasanalytik über eine besonders hohe Sensibilität und Selektivität. Diese verdanken sie dem speziellen Strahlungsempfänger, bei dem es sich beispielsweise um einen LuftDetektor handelt, der mit der nachzuweisenden Messkomponente gefüllt ist. Bei periodischer Bestrahlung mit infrarotem Licht absorbieren die im Empfänger enthaltenen Moleküle spezifische Energieanteile, welche über Schwingungsrelaxation zu einer Temperatur- und Druckerhöhung des Gases führen. Diese Druckerhöhung wird in bestimmten Ausgestaltungen des Empfängers über einen Membrankondensator gemessen. In anderen Ausgestaltungen wird die Druckerhöhung über einen Mikroströmungsfühler gemessen.

Im speziellen Fall des NDIR-Zweistrahlfotometers existieren zwei optische Strahlengänge durch die Messgaszelle. Auf der einen Seite der Messgaszelle, bei der es sich um die durch das Messgas beströmte Messseite handelt, befindet sich der erste optische Strahlengang und auf der anderen Seite, bei der es sich um die typischerweise mit Inertgas ohne IR-Absorption (beispielsweise N₂) befüllte Referenzseite handelt, befindet sich der zweite optische Strahlengang.

Die für die Modulation des IR-Strahls verantwortliche Chopperscheibe öffnet nacheinander abwechselnd beide Strahlengänge. Wenn auf der Messseite in Abwesenheit der Messkomponente keine Strahlung absorbiert wird, misst der Empfänger keinen Unterschied zwischen beiden Strahlengängen und es ergibt sich ein konstantes Messsignal. In Gegenwart der Messkomponente resultiert durch Absorption infraroter Strahlung auf der Messseite dagegen ein periodisches Differenzsignal. Dieses Signal wird in der Signalverarbeitung bei der durch die Rotation der Chopperscheibe vorgegebenen Modulationsfrequenz demoduliert. Diese Demodulation erfolgt beispielsweise mit Hilfe einer Lock-In-Verstärkung mit einer anschließenden Tiefpassfilterung.

Der Membrankondensator (oder der Mikroströmungsfühler) im opto-pneumatischen Empfänger wird nicht nur durch Druckerhöhung des Gases im Empfänger aus seiner Ruheposition ausgelenkt, sondern prinzipbedingt auch durch Erschütterungen, die von außen auf den NDIR-Gasanalysator einwirken. Bedingt durch den besonderen Aufbau des opto-pneumatischen Empfängers ergibt sich eine hohe Empfindlichkeit gegenüber unerwünschten Anregungen, insbesondere in bestimmte Vorzugsrichtungen der optischen Bank, z. B. senkrecht zur Membranfläche des Kondensators. Periodische Anregungen können z. B. durch Schwingungen am Aufstellungsort des Gasanalysators (Gebäude, Messwagen, etc.) entstehen. Diese Auslenkungen addieren sich zum eigentlichen Messsignal und verfälschen dieses mehr oder minder. Besonders stark kann das Messsignal beeinflusst werden, wenn die Schwingungen Frequenzanteile enthalten, die mit der Modulationsfrequenz der Chopperscheibe übereinstimmen. Dann lässt sich die Störung mit dem bisher eingesetzten Auswerteverfahren im Regelfall nicht eliminieren.

### Zusammenfassung der Erfindung

Es ist eine Aufgabe der Erfindung, eine Reduzierung der Schwingungsempfindlichkeit bei NDIR-Zweistrahlfotometern zu ermöglichen.

Es sind eine Chopperscheibe für ein nicht-dispersives Infrarot-Zweistrahlfotometer zur Gasanalyse, ein nicht-dispersives Infrarot-Zweistrahlfotometer mit einer solchen Chopperscheibe, ein Verfahren zur Signalauswertung eines Signals, das mit einem nicht-dispersiven Infrarot-Zweistrahlfotometer erfasst wird, und eine Verwendung gemäß den Merkmalen der unabhängigen Patentansprüche angegeben. Weiterbildungen der Erfindung ergeben sich aus den Unteransprüchen.

Die beschriebenen Ausführungsbeispiele betreffen gleichermaßen das Fotometer sowie das Verfahren. In anderen Worten lassen sich im Folgenden beispielsweise im Hinblick auf das Fotometer beschriebenen Merkmale auch als Verfahrensschritte implementieren und umgekehrt.

Gemäß einem Ausführungsbeispiel der Erfindung ist eine Chopperscheibe für ein nicht-dispersives Infrarot-Zweistrahlfotometer zur Gasanalyse angegeben. Die Chopperscheibe weist eine erste Aussparung und eine zweite Aussparung auf, durch welche das Licht, das von einer Strahlungsquelle ausgesendet wird, treten kann, um in die Messgaszelle einzutreten. Die erste Aussparung ermöglicht es hierbei, dass das zur Fotometrie ausgesendete Licht für einen ersten Zeitraum nur durch eine Referenzseite der Messgaszelle des Fotometers strahlt. Die zweite Aussparung hingegen ermöglicht es, dass das zur Fotometrie ausgesendete Licht für einen zweiten Zeitraum, der nicht mit dem ersten Zeitraum überlappt, nur durch eine Messseite der Messgaszelle des Fotometers strahlt. Der erste Zeitraum ist hierbei größer als der zweite Zeitraum.

Beispielsweise erstreckt sich die erste Aussparung über ein erstes Kreissegment der Chopperscheibe, welches einen Öffnungswinkel von etwa 270 Grad aufweist. Die zweite Aussparung erstreckt sich über ein zweites Kreissegment der Chopperscheibe, welches einen Öffnungswinkel von 90 Grad aufweist. Beide Kreissegmente zusammen ergeben einen Vollkreis von 360 Grad.

Gemäß einem weiteren Ausführungsbeispiel der Erfindung überlappen die beiden Kreissegmente nicht, so dass entweder die erste Aussparung oder die zweite Aussparung Licht in die Messgaszelle (welche die Messseite und die Referenzseite aufweist) eintreten lässt.

Zusätzlich zu den beiden Aussparungen kann noch eine dritte Aussparung vorgesehen sein, welche verhältnismäßig klein ist und welche sich innerhalb des ersten Kreissegments befindet. Diese dritte Aussparung ermöglicht es, dass das zur Fotometrie ausgesendete Licht für einen kurzen dritten Zeitraum, der innerhalb des ersten Zeitraums liegt, sowohl durch die Messseite der Messgaszelle als auch durch die Referenzseite der Messgaszelle des Fotometers strahlt.

Diese dritte Aussparung kann zum Erzeugen eines Triggerimpulses zur zeitlichen Trennung der Messsignale verwendet werden.

Gemäß einem weiteren Ausführungsbeispiel der Erfindung ist ein nicht-dispersives Infrarot-Zweistrahlfotometer zur Gasanalyse angegeben, welches eine oben und im Folgenden beschriebene Chopperscheibe aufweist.

Gemäß einem weiteren Ausführungsbeispiel der Erfindung ist die Verwendung einer oben und im Folgenden beschriebenen Chopperscheibe für ein nicht-dispersives Infrarot-Zweistrahlfotometer zur Gasanalyse und insbesondere zur Reduzierung der Schwingungsempfindlichkeit des Fotometers angegeben.

Gemäß einem weiteren Ausführungsbeispiel der Erfindung ist ein Verfahren zur Signalauswertung eines Signals, das mit einem nicht-dispersiven Infrarot-Zweistrahlfotometer erfasst wird, angegeben. Hierbei wird Licht ausgesendet, durchläuft die Messgaszelle und wird dann detektiert. Das Licht strahlt für einen ersten Zeitraum im Wesentlichen nur durch eine Referenzseite der Messgaszelle des Fotometers. Weiterhin wird Licht detektiert, das für einen zweiten Zeitraum nur durch eine Messseite der Messgaszelle des Fotometers strahlt. Darüber hinaus erfolgt eine zeitliche Trennung der so detektierten Signale in Messsignale, die in einem Messzyklus liegen, und in Korrektursignale, die in einem Korrekturzyklus liegen. Der erste Zeitraum ist größer als der zweite Zeitraum. Hierdurch wird eine effektive Reduzierung von schwingungsbedingten Artefakten möglich, wodurch die Qualität des Messergebnisses erhöht werden kann.

Gemäß einem weiteren Ausführungsbeispiel der Erfindung liegt der so erhaltene Messzyklus zu einem Teil in dem ersten Zeitraum und zu einem anderen Teil in dem zweiten Zeitraum, wobei der Korrekturzyklus vollständig in dem ersten Zeitraum liegt.

In anderen Worten wird also im ersten Zeitraum der Korrekturzyklus durchgeführt und entsprechende Korrekturdaten erfasst. Weiterhin wird in diesem ersten Zeitraum ein Teil des Messzyklus durchgeführt und es werden entsprechende Messdaten erfasst. In dem zweiten Zeitraum hingegen, der kürzer ist als der erste Zeitraum, werden zusätzliche Messdaten für den Messzyklus erfasst.

Gemäß einem weiteren Ausführungsbeispiel der Erfindung erfolgt die zeitliche Trennung der detektierten Signale in Messsignale und Korrektursignale mit Hilfe von durch die Chopperscheibe erzeugte Triggerimpulse.

Gemäß einem weiteren Ausführungsbeispiel der Erfindung erfolgt daraufhin eine identische Weiterverarbeitung der Messsignale und der Korrektursignale. Gemäß einem weiteren Ausführungsbeispiel der Erfindung erfolgt nach der Weiterverarbeitung der beiden Signale eine Subtraktion eines Korrektur-Rohmesswerts, der aus den Korrekturwerten resultiert, von einem Rohmesswert, der aus den Messwerten resultiert. Hierdurch wird ein korrigierter Rohmesswert erhalten, der sich dadurch auszeichnet, dass ungewollte Schwingungseffekte weitgehend korrigiert sind.

Gemäß einem weiteren Ausführungsbeispiel der Erfindung erfolgt daraufhin eine Weiterverarbeitung des so erhaltenen korrigierten Rohmesswerts.

Im Folgenden werden mit Verweis auf die Figuren Ausführungsbeispiele der Erfindung beschrieben.

### Kurze Beschreibung der Figuren

Fig. 1 zeigt den Aufbau eines NDIR-Zweistrahlfotometers gemäß einem Ausführungsbeispiel der Erfindung.
Fig. 2 zeigt eine Chopperscheibe gemäß einem Ausführungsbeispiel der Erfindung.
Fig. 3 zeigt einen Zeitverlauf des Signals am opto-pneumatischen Empfänger ohne bzw. mit einer periodischen Störung.
Fig. 4 zeigt den Ablauf eines Signalverarbeitung gemäß einem Ausführungsbeispiel der Erfindung.

Die Darstellungen in den Figuren sind schematisch und nicht maßstäblich.

### Detaillierte Beschreibung von Ausführungsbeispielen

In der folgenden Figurenbeschreibung werden für die gleichen oder ähnlichen Elemente die gleichen Bezugsziffern verwendet.

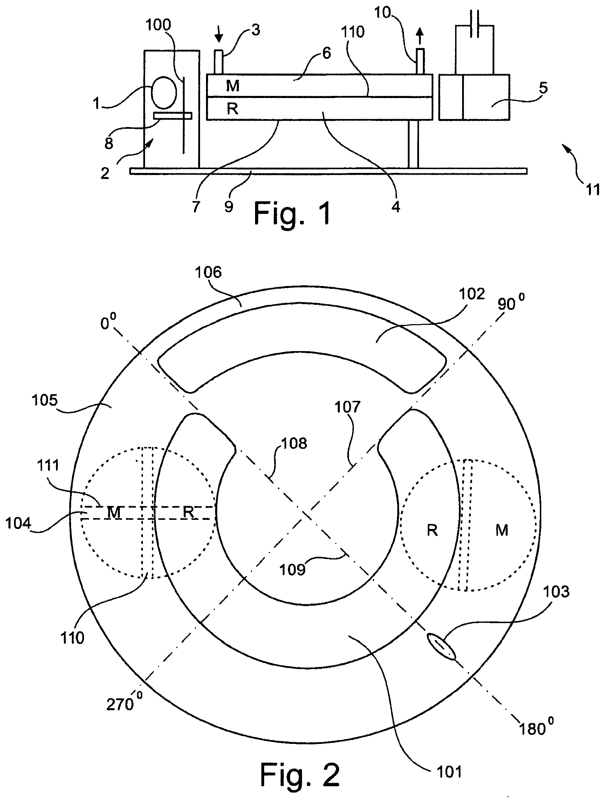

Fig. 1 zeigt den prinzipiellen Aufbau eines NDIR-Zweistrahlfotometers 11 mit einer Chopperscheibe 100 gemäß einem Ausführungsbeispiel der Erfindung. Das Fotometer 11 weist auf der einen Seite eine Strahlungsquelle (z. B. einen Infrarotstrahler) 1 sowie eine Modulationseinheit 2 mit einer Chopperscheibe 100 und einem Antriebsmotor 8 auf. Die Messgaszelle 4 befindet sich (hinsichtlich der Strahlrichtung der Quelle 1) hinter der Chopperscheibe 100 und ist zweigeteilt. Die Messgaszelle 4 weist eine Messseite 6 (M) und eine Referenzseite 7 (R) auf. Die Messseite 6 ist an eine Messgasleitung 3 zum Zuleiten von Messgas angeschlossen. Weiterhin ist eine

Messgasableitung 10 vorgesehen, mit deren Hilfe das Messgas wieder auf der Messseite 6 entfernt werden kann. In der Referenzseite 7 der Messgaszelle 4 befindet sich Referenzgas, beispielsweise Inertgas, wie Stickstoff (N₂).

Auf der Ausgangsseite der Messgaszelle 4 ist ein opto-pneumatischer Empfänger 5 mit einem Membrankondensator oder einem Mikroströmungsfühler angeordnet.

Fig. 2 zeigt eine Chopperscheibe 100 für das in Fig. 1 gezeigte NDIR-Zweistrahlfotometer. Die Chopperscheibe 100 weist eine erste Aussparung 101 und eine zweite Aussparung 102 auf. Die erste Aussparung 101 erstreckt sich über ein Kreissegment der Chopperscheibe, welches einen Winkel von 270 Grad einschließt und durch die beiden gestrichelten Linien 107, 108 begrenzt ist. Dieses erste Kreissegment 105 kann natürlich auch kleiner oder größer gewählt werden. Allerdings sollte dieses erste Kreissegment 105 einen größeren Winkel einschließen als das zweite Kreissegment 106, welches im vorliegenden Fall einen Winkel von 90 Grad einschließt. In diesem zweiten Kreissegment 106 befindet sich die zweite Aussparung 102.

Die beiden Aussparungen 101, 102 sind derart angeordnet, dass sie nicht "überlappen", so dass Licht, das beispielsweise im Bereich des gestrichelten Kreises 104, der den Querschnitt der Messgaszelle mit Messseite M, Referenzseite R und einer dazwischen angeordneten Trennwand 110 symbolisiert, im Wesentlichen während dem ersten Zeitraum nur durch die erste Aussparung 101 und während dem zweiten Zeitraum nur durch die zweite Aussparung 102 srahlt.

Weiterhin kann in der Chopperscheibe eine kleine Aussparung 103 vorgesehen sein, welche zu einem bestimmten Zeitpunkt Licht in die Messseite M der Messgaszelle einlässt. Diese dritte Aussparung 103 ist beispielsweise nach dem ersten Drittel der ersten Aussparung 101 angeordnet, so dass bei der ersten Viertelumdrehung der Chopperscheibe Licht im Wesentlichen nur durch die Aussparung 102 in die Messseite eintritt. Während der zweiten Viertelumdrehung tritt Licht im Wesentlichen nur durch die Aussparung 101 in die Referenzseite der Messgaszelle ein. Dann erfolgt ein Triggerpuls, hervorgerufen durch das Licht, das durch die dritte Aussparung 103 tritt. Während der restlichen halben Umdrehung der Chopperscheibe tritt lediglich Licht im Wesentlichen durch die erste Aussparung 101.

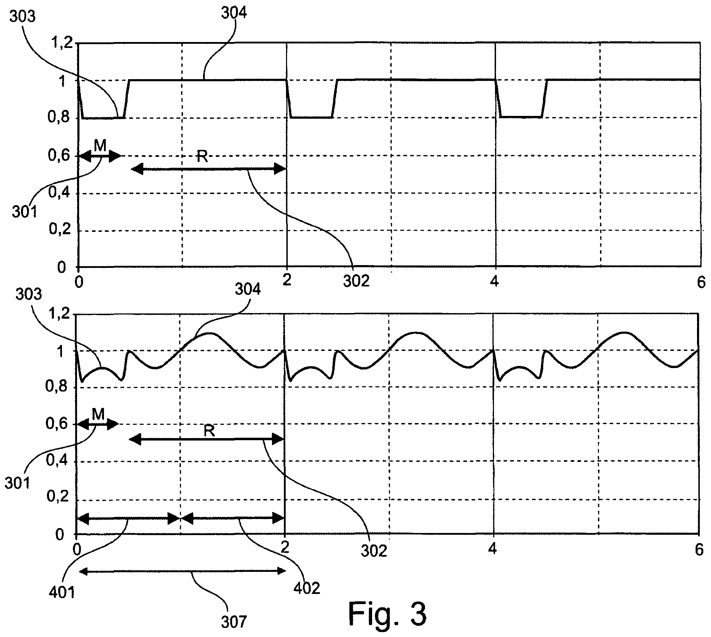

Die erfindungsgemäße Chopperscheibe 100 erlaubt es, dass während drei Vierteln einer Radumdrehung IR-Licht nur durch die Vergleichsseite (Referenzseite) der Messgaszelle gesendet wird. Dadurch entstehen zwei Signalfolgen (oder Signalzyklen) am Empfänger, wie in Fig. 3 dargestellt.

Während der ersten Hälfte 401 einer vollen Umdrehung der Chopperscheibe (Blendradumdrehung) 307 kann wieder das bereits erwähnte Differenzsignal zwischen Mess- und Vergleichsstrahlengang entstehen. Diese Zeitreihe definiert den "Messzyklus".

In der zweiten Hälfte 402 der Blendradumdrehung kommt dagegen ein vom Messgas unabhängiges Messsignal am Empfänger zustande. Dies ist der sog. "Korrekturzyklus". Sofern keine Schwingungen auf den Analysator wirken, ist dieser Teil des Messsignals in etwa konstant über die Zeit, wie in der oberen Abbildung der Fig. 3 zu sehen. In Gegenwart von Schwingungen kann hingegen aus diesem Teil des Messsignals der Schwingungseinfluss quantifiziert und zur Korrektur des "Messzyklus" verwendet werden.

Der Pfeil 301 bezeichnet den zweiten Zeitraum, während dem die Messseite der Messgaszelle durchstrahlt wird und der Pfeil 302 bezeichnet den ersten Zeitraum, während dem die Referenzseite der Messgaszelle des Fotometers durchstrahlt wird. Das Bezugszeichen 303 bezeichnet das im zweiten Zeitraum empfangene Messsignal und das Bezugszeichen 304 bezeichnet das im ersten Zeitraum empfangene Messsignal. Da keine Störungen periodischer Art vorliegen, sind die beiden Messsignale 303, 304 während den entsprechenden Messzeiträumen zeitlich konstant.

Der Pfeil 307 symbolisiert die Länge einer vollen Blendenradumdrehung.

Anhand der unteren Abbildung der Fig. 3 ist zu sehen, wie sich eine periodische Störung auf das Messsignal auswirken kann. Sowohl die Messwerte während des ersten Zeitraums 304 als auch die Messwerte während des zweiten Zeitraums 303 sind nicht zeitlich konstant.

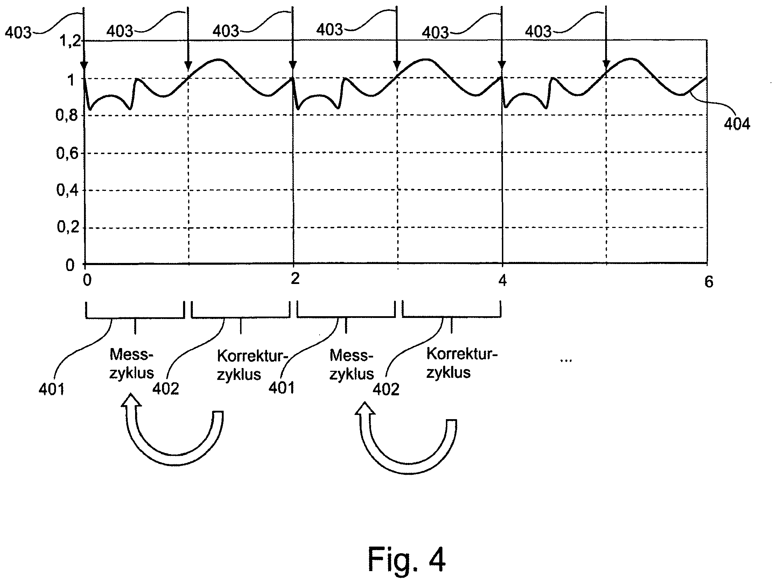

Die Fig. 3 und 4 verdeutlichen eine modifizierte Signalauswertung. Diese modifizierte Signalauswertung wird beispielsweise in einem digitalen Signalprozessor (DSP) der Sensorelektronik des NDIR-Fotometers durchgeführt. Dabei werden die Signale aus dem Messzyklus und dem Korrekturzyklus zunächst mit Hilfe von Triggerimpulsen 403 einer durch die Messseite der Chopperscheibe unterbrochenen Lichtschranke zeitlich getrennt. Dann werden die beiden so getrennten Zeitreihen (also die "Messdaten" und die "Korrekturdaten") identisch weiter verarbeitet, beispielsweise durch eine Lock-In-Verstärkung bei gleicher Frequenz und Phase für Messzyklus und Korrekturzyklus. Anschließend wird der sich ergebende Rohmesswert aus dem Korrekturzyklus von dem Rohmesswert aus dem Messzyklus subtrahiert. Der so korrigierte Rohmesswert geht dann in die weitere Messwertverarbeitung (Normierung, Linearisierung, Druck- und Temperaturkorrektur, etc.) ein.

Insbesondere ist in Fig. 4 zu sehen, dass die Triggerpulse 403 jeweils nach einer halben Umdrehung der Chopperscheibe erfolgen. Prinzipiell ist es auch möglich, Messzyklus 401 und Korrekturzyklus 402 verschieden lang zu gestalten. Beispielsweise könnte der Korrekturzyklus doppelt so lang sein wie der Messzyklus, oder umgekehrt. In diesem Fall könnten mehrere (beispielsweise zwei) dritte Aussparungen 103 in der Chopperscheibe vorgesehen sein, um die Aufspaltung der Messdaten im Korrekturzyklus und Messzyklus zu triggern. Falls beispielsweise der Korrekturzyklus doppelt so lang ist wie der Messzyklus, könnte vor der Subtraktion eine Halbierung der Korrekturrohmesswerte erfolgen. Ebenso könnte, falls der Korrekturzyklus nur halb so lange dauert wie der Messzyklus, vor der Subtraktion eine Verdoppelung der Korrekturrohmesswerte erfolgen.

Diese Korrektur (also im oben beschriebenen Fall die Subtraktion) kann nach jeder vollen Umdrehung der Chopperscheibe erfolgen.

Auf diese Art kann eine Unterdrückung der Schwingungsempfindlichkeit des NDIR-Fotometers um ein bis zwei Größenordnungen erreicht werden.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Nichtdispersives Infrarot-Zweistrahlfotometer zur Gasanalyse, dessen Fotometer eine Chopperscheibe (100) aufweist, die Chopperscheibe (100) aufweisend:
eine erste Aussparung (101), die es ermöglicht, dass das zur Fotometrie ausgesendete Licht für einen ersten Zeitraum nur durch eine Referenzseite (7) einer Messgaszelle (4) des Fotometers (11) strahlt;
eine zweite Aussparung (102), die es ermöglicht, dass das zur Fotometrie ausgesendete Licht für einen zweiten Zeitraum nur durch eine Messseite (6) der Messgaszelle (4) des Fotometers (11) strahlt;
wobei der erste Zeitraum größer ist als der zweite Zeitraum und die beiden Zeiträume sich nicht überlappen.

2. Fotometer nach Anspruch 1,
wobei sich die erste Aussparung (101) über ein erstes Kreissegment (105) der Chopperscheibe (100) erstreckt, welches einen Öffnungswinkel von 270 Grad aufweist; und
wobei sich die zweite Aussparung (102) über ein zweites Kreissegment (106) der Chopperscheibe (100) erstreckt, welches einen Öffnungswinkel von 90 Grad aufweist.

3. Fotometer nach Anspruch 2,
wobei die beiden Kreissegmente (105, 106) der Chopperscheibe (100) nicht überlappen.

4. Fotometer nach einem der vorhergehenden Ansprüche, die Chopperscheibe (100) weiterhin aufweisend:
eine dritte Aussparung (103), die sich in dem ersten Kreissegment (105) befindet und die es ermöglicht, dass das zur Fotometrie ausgesendete Licht für einen kurzen dritten Zeitraum, der innerhalb des ersten Zeitraums liegt, durch die Messseite (6) der Messgaszelle (4) des Fotometers (11) strahlt.

5. Verfahren zur Signalauswertung eines Signals, das mit einem nichtdispersiven Infrarot-Zweistrahlfotometer (11) erfasst wird, das Verfahren aufweisend die Schritte:
Detektieren von Licht, das für einen ersten Zeitraum im Wesentlichen nur durch eine Referenzseite (7) einer Messgaszelle (4) des Fotometers (11) strahlt;
Detektieren von Licht, das für einen zweiten Zeitraum nur durch eine Messseite (6) der Messgaszelle (4) des Fotometers (11) strahlt;
zeitliche Trennung der detektierten Signale in Messsignale, die in einem Messzyklus liegen, und Korrektursignale, die in einem Korrekturzyklus liegen;
wobei der erste und der zweite Zeitraum ducrh eine Chopperscheibe (100) gemäß Anspruch 1 erzeugt wird, wobei der erste Zeitraum größer ist als der zweite Zeitraum und die beiden zeiträume sich nicht überlappen und
wobei der Messzyklus zu einem Teil in dem ersten Zeitraum und zu einem anderen Teil in dem zweiten Zeitraum liegt; und
wobei der Korrekturzyklus vollständig in dem ersten Zeitraum liegt.

6. Verfahren nach Anspruch 5, wobei die zeitliche Trennung der detektierten Signale mit Hilfe von durch eine Chopperscheibe (100) erzeugte Triggerimpulse erfolgt.

7. Verfahren nach einem der Ansprüche 5 oder 6, weiterhin aufweisend den Schritt: identische Weiterverarbeitung der Messsignale und der Korrektursignale.

8. Verfahren nach einem der Ansprüche 5 bis 7, weiterhin aufweisend den Schritt: Subtrahieren eines Korrektur-Rohmesswerts, der aus den Korrekturwerten resultiert, von einem Rohmesswert, der aus den Messwerten resultiert, wodurch ein korrigierter Rohmesswert erhalten wird.

9. Verfahren nach Anspruch 8, weiterhin aufweisend den Schritt: Verarbeitung des so erhaltenen korrigierten Rohmesswerts.

## Claims

1. Non-dispersive infrared double-beam photometer for gas analysis, the photometer of which has a chopper disc (100), with the chopper disc (100) having:
a first cutout (101) permitting the light emitted for photometry to radiate for a first time period only through a reference side (7) of a measurement gas cell (4) of the photometer (11);
a second cutout (102) permitting the light emitted for photometry to radiate for a second time period only through a measurement side (6) of the measurement gas cell (4) of the photometer (11);
wherein the first time period is greater than the second time period and the two time periods do not overlap.

2. Photometer according to Claim 1,
wherein the first cutout (101) extends over a first circular segment (105) of the chopper disc (100) that has an opening angle of 270 degrees; and
wherein the second cutout (102) extends over a second circular segment (106) of the chopper disc (100) that has an opening angle of 90 degrees.

3. Photometer according to Claim 2,
wherein the two circular segments (105, 106) of the chopper disc (100) do not overlap.

4. Photometer according to one of the preceding claims, with the chopper disc (100) furthermore having:
a third cutout (103) that is located in a first circular segment (105) and permits the light emitted for photometry to radiate for a short third time period, which lies within the first time period, through the measurement side (6) of the measurement gas cell (4) of the photometer (11).

5. Method for signal-evaluation of a signal that is captured with a non-dispersive infrared double-beam photometer (11), with the method having the steps of:
detecting light that radiates for a first time period substantially only through a reference side (7) of a measurement gas cell (4) of the photometer (11);
detecting light that radiates for a second time period only through a measurement side (6) of the measurement gas cell (4) of the photometer (11);
temporal separation of the detected signals into measurement signals, which lie in a measurement cycle, and correction signals, which lie in a correction cycle;
wherein the first and the second time period are produced by a chopper disc (100) according to Claim 1, wherein the first time period is greater than the second time period and the two time periods do not overlap, and
wherein the measurement cycle lies, in a first part, in the first time period and, in a second part, in the second time period; and
wherein the correction cycle lies entirely in the first time period.

6. Method according to Claim 5, wherein the temporal separation of the detected signal is effected with the aid of trigger pulses generated by a chopper disc (100).

7. Method according to either of Claims 5 or 6, furthermore having the step of:
identical further processing of the measurement signals and of the correction signals.

8. Method according to one of Claims 5 to 7, furthermore having the step of:
subtracting a correction raw measurement value resulting from the correction values from a raw measurement value resulting from the measurement values to produce a corrected raw measurement value.

9. Method according to Claim 8, furthermore having the step of:
processing the corrected raw measurement value thus obtained.

## Revendications

1. Photomètre infrarouge non dispersif à deux faisceaux destiné à l'analyse de gaz, ledit photomètre comportant un disque hacheur (100), le disque hacheur (100) comportant :
un premier évidement (101) qui permet à la lumière émise pour la photométrie de rayonner uniquement à travers un côté de référence (7) d'une cellule de gaz de mesure (4) du photomètre (11) pendant un premier intervalle de temps ;
un deuxième évidement (102) qui permet à la lumière émise pour la photométrie de rayonner uniquement à travers un côté de mesure (6) de la cellule de gaz de mesure (4) du photomètre (11) pendant un deuxième intervalle de temps ;
le premier intervalle de temps étant plus grand que le deuxième intervalle de temps et les deux intervalles de temps ne se chevauchant pas.

2. Photomètre selon la revendication 1,
le premier évidement (101) s'étendant sur un premier segment de cercle (105) du disque hacheur (100) qui a un angle d'ouverture de 270 degrés ; et
le deuxième évidement (102) s'étendant sur un deuxième segment de cercle (106) du disque hacheur (100) qui a un angle d'ouverture de 90 degrés.

3. Photomètre selon la revendication 2,
les deux segments de cercle (105, 106) du disque hacheur (100) ne se chevauchant pas.

4. Photomètre selon l'une des revendications précédentes, le disque hacheur (100) comportant en outre :
un troisième évidement (103) qui est situé dans le premier segment de cercle (105) et qui permet à la lumière émise pour la photométrie de rayonner à travers le côté de mesure (6) de la cellule de gaz de mesure (4) du photomètre (11).

5. Procédé d'évaluation d'un signal qui est détecté avec un photomètre infrarouge non dispersif à deux faisceaux (11), le procédé comprenant les étapes suivantes :
détecter la lumière qui, pendant un premier intervalle de temps, ne rayonne sensiblement qu'à travers un côté de référence (7) d'une cellule de gaz de mesure (4) du photomètre (11) ;
détecter la lumière qui, pendant un deuxième intervalle de temps, ne rayonne qu'à travers un côté de mesure (6) de la cellule de gaz de mesure (4) du photomètre (11) ;
séparer temporellement les signaux détectés en signaux de mesure qui se trouvent dans un cycle de mesure et en signaux de correction qui se trouvent dans un cycle de correction ;
le premier et le deuxième intervalle de temps étant générés par un disque hacheur (100) selon la revendication 1, le premier intervalle de temps étant plus grand que le deuxième intervalle de temps et les deux intervalles de temps ne se chevauchant pas et
le cycle de mesure étant en partie dans le premier intervalle de temps et en partie dans le deuxième intervalle de temps ; et
le cycle de correction étant entièrement dans le premier intervalle de temps.

6. Procédé selon la revendication 5,
la séparation temporelle des signaux détectés étant effectuée à l'aide d'impulsions de déclenchement générées par un disque hacheur (100).

7. Procédé selon l'une des revendications 5 ou 6, comportant en outre l'étape suivante:
effectuer un traitement ultérieur identique des signaux de mesure et des signaux de correction.

8. Procédé selon l'une des revendications 5 à 7, comportant en outre l'étape suivante :
soustraire une valeur de mesure brute de correction qui résulte des valeurs de correction, d'une valeur de mesure brute, qui résulte des valeurs de mesure, de façon à obtenir une valeur de mesure brute corrigée.

9. Procédé selon la revendication 8, comprenant en outre l'étape suivante :
traiter la valeur de mesure brute corrigée ainsi obtenue.
